# EUROPÄISCHE PATENTANMELDUNG

(11) **EP 4 818 086 A1**
(43) Veröffentlichungstag der Anmeldung: **07.10.2026**
(21) Anmeldenummer: 26161159.4
(22) Anmeldetag: 27.02.2026
(51) Int. Cl.: B65G 47/71, B65G 47/51

(54) **EINRICHTUNG ZUM TRANSPORTIEREN UND BEDARFSABHÄNGIGEN PUFFERN VON BE-HÄLTERN**

(30) Priorität: 01.04.2025 DE 102025112655
(71) Anmelder: Krones AG, 93073 Neutraubling (DE)
(72) Erfinder: ALSHEIKH, Ahmad, 93073 Neutraubling (DE); BACHHUBER, Thomas, 93073 Neutraubling (DE)
(74) Vertreter: Grünecker Patent- und Rechtsanwälte PartG mbB

(57) **Zusammenfassung**

Einrichtung zum Transportieren und bedarfsabhängigen Puffern von Behältern, die Einrichtung umfassend einen Einlauf, in dem entlang einer ersten Richtung transportiert werden können, einen Verteilbereich umfassend wenigstens zwei in einer zweiten Richtung entgegengesetzt zur ersten Richtung unabhängig voneinander bewegbare Transportbänder, wobei die Behälter von dem Einlauf dem Verteilbereich zugeführt werden können, einen Pufferbereich, dem Behälter von dem Verteilbereich zugeführt werden können, wobei die Behälter im Pufferbereich in wenigstens zwei Pufferbahnen unabhängig voneinander in einer dritten Richtung quer zur zweiten Richtung gefördert und gepuffert werden können, einen Auslauf, dem Behälter vom Pufferbereich zugeführt und in dem Behälter entlang einer vierten Richtung parallel zur dritten Richtung gefördert werden können, wobei die Einrichtung eine Steuereinheit umfasst, die ausgebildet ist, die wenigstens zwei Transportbänder und die wenigstens zwei Pufferbahnen so zu steuern, dass Behälter entsprechend einer Ordnung im Einlauf nach Passieren des Pufferbereichs dem Auslauf mit im Wesentlichen derselben Ordnung zugeführt werden.

## Beschreibung

Die vorliegende Erfindung betrifft eine Einrichtung zum Transportieren und bedarfsabhängigen Puffern von Behältern gemäß Anspruch 1, sowie ein Verfahren zum Transportieren und bedarfsabhängigen Puffern von Behältern gemäß Anspruch 9.

### Stand der Technik

Einrichtungen zum Transportieren und Puffern von Behältern sind aus dem Stand der Technik grundsätzlich bekannt.

So zeigt beispielsweise die WO 2024/008342 A1 eine Vorrichtung zum automatischen Einstellen eines Behältertransports auf einer Vielzahl von Bereichen, die zusammen einen Massentransport bilden. Die einzelnen Transportbänder und Bereiche können so angesteuert werden, dass eine möglichst gleiche Verteilung über die gesamte Breite der Transporteure möglich ist.

Beim Puffern von Behältern besteht jedoch grundsätzlich das Problem, dass die Einrichtungen üblicherweise sehr groß sind und nur bedingt auf eine Änderung von Prozessparametern stromauf und stromab der entsprechenden Puffer reagieren können, sodass eine flexible Einstellbarkeit der Pufferleistung entweder schwierig möglich ist oder der Platzbedarf der Puffer groß wird.

### Aufgabe

Ausgehend vom bekannten Stand der Technik besteht die zu lösende technische Aufgabe somit darin, eine Einrichtung zum Transportieren und bedarfsweisen Puffern von Behältern anzugeben, mit der das Puffern effizient bei sich ändernden Betriebsparametern gewährleistet werden kann und gleichzeitig möglichst Platz eingespart wird.

### Lösung

Diese Aufgabe wird erfindungsgemäß durch die Einrichtung zum Transportieren und bedarfsabhängigen Puffern von Behältern gemäß Anspruch 1 sowie das Verfahren zum Transportieren und bedarfsabhängigen Puffern von Behältern gemäß Anspruch 9 gelöst. Vorteilhafte Weiterbildungen der Erfindung sind in den Unteransprüchen erfasst.

Die erfindungsgemäße Einrichtung zum Transportieren und bedarfsabhängigen Puffern von Behältern umfasst einen Einlauf, in dem entlang einer ersten Richtung transportiert werden können, einen Verteilbereich umfassend wenigstens zwei in einer zweiten Richtung entgegengesetzt zur ersten Richtung unabhängig voneinander bewegbare Transportbänder, wobei die Behälter von dem Einlauf dem Verteilbereich zugeführt werden können, einen Pufferbereich, dem Behälter von dem Verteilbereich zugeführt werden können, wobei die Behälter im Pufferbereich in wenigstens zwei Pufferbahnen unabhängig voneinander in einer dritten Richtung quer zur zweiten Richtung gefördert und gepuffert werden können, einen Auslauf, dem Behälter vom Pufferbereich zugeführt und in dem Behälter entlang einer vierten Richtung parallel zur dritten Richtung gefördert werden können, wobei die Einrichtung eine Steuereinheit umfasst, die ausgebildet ist, die wenigstens zwei Transportbänder und die wenigstens zwei Pufferbahnen so zu steuern, dass Behälter entsprechend einer Ordnung im Einlauf nach Passieren des Pufferbereichs dem Auslauf mit im Wesentlichen derselben Ordnung zugeführt werden.

Der Einlauf kann entweder ein geordneter Einlauf oder in Form eines Massentransporteurs ausgeführt sein und ein oder mehrere Transportbänder umfassen, in denen die Behälter transportiert werden können. Zumindest in einem Bereich, in dem die Behälter in den Verteilbereich übertreten, ist der Einlauf bevorzugt so ausgebildet, dass die Behälter sich beliebig in dem Einlauf und in dem Verteilbereich verteilen können.

Die Pufferbahnen können jeweils als genau ein Transportband umfassend ausgeführt sein. Es ist alternativ jedoch auch möglich, dass jede Pufferbahn wenigstens zwei oder mehr Transportbänder umfasst, wobei diese Transportbänder dann bevorzugt alle mit derselben Geschwindigkeit bewegt werden bzw. Behälter in dieser jeweiligen Pufferbahn und den entsprechenden Transportbändern der Pufferbahn stets die gleiche Geschwindigkeit aufweisen. Im Pufferbereich findet bevorzugt keine Trennung zwischen den einzelnen Pufferbahnen statt, sodass ein Übertritt von Behältern zwischen den Pufferbahnen möglich ist. Dies ist jedoch nicht zwingend der Fall und es kann auch vorgesehen sein, dass in dem Pufferbereich zumindest teilweise Begrenzungen wie beispielsweise Leitbleche angeordnet sind, die sich in der dritten Richtung über zumindest einen Teil der Pufferbahnen erstrecken und so einen Übertritt von Behältern aus einer ersten Pufferbahn in eine benachbarte Pufferbahn verhindern.

Die Steuereinheit kann insbesondere als Computer mit zugeordnetem Speicher und Prozessor ausgeführt sein, wobei in dem Speicher Programminstruktionen hinterlegt sein können, die, wenn sie von dem Prozessor ausgeführt werden, ein Steuern der Transportbänder und der Pufferbahnen ermöglichen.

Das Steuern der Transportbänder und der Pufferbahnen kann im Sinne der Erfindung so verstanden werden, dass die Steuereinheit Antriebseinrichtungen wie beispielsweise Motoren, insbesondere Servomotoren, die den jeweiligen Transportbändern und Pufferbereichen zugeordnet sind, ansteuern kann und hierdurch eine Transportgeschwindigkeit der Behälter und/oder eine Beschleunigung der Behälter und/oder ein Verzögern der Behälter in den jeweiligen Transportbändern oder Pufferbahnen einstellen kann.

Dass die Behälter entsprechend einer Ordnung im Einlauf nach Passieren des Pufferbereichs dem Auslauf mit im Wesentlichen derselben Ordnung zugeführt werden, ist erfindungsgemäß so zu verstehen, dass bevorzugt der Transport der Behälter durch die Einrichtung vom Einlauf bis zum Auslauf entsprechend eines First-In-First-Out-Prinzips erfolgt, sodass ein zuerst vom Einlauf in den Verteilbereich eindringender Behälter auch zuerst aus dem Pufferbereich in den Auslauf übertritt.

Aufgrund des gegebenenfalls nicht vollständig geordneten Transports von Behältern im Pufferbereich und insbesondere beim Übertritt vom Verteilbereich in den Pufferbereich und vom Pufferbereich in den Auslauf, ist es jedoch möglich, dass Behälter an geringfügig anderer Stelle als in der ursprünglichen Ordnung im Einlauf in den Auslauf übertreten.

Erfindungsgemäß ist daher ebenfalls umfasst, dass die im Wesentlichen gleiche Ordnung auch eine geringfügige Umorientierung bzw. Umordnung der Reihenfolge der Behälter umfasst, sodass auch ein geringfügiger Wechsel in der Reihenfolge der Behälter bzw. in der Ordnung der Behälter um einen maximalen absoluten Betrag, beispielsweise um ±5 Plätzeoder um ±10 Plätze oder um ±20 Plätze oder um ±50 Plätze möglich ist. Alternativ kann auch ein relativer Wert, beispielsweise abhängig von der maximalen Pufferkapazität, die Grenze angeben, bis zu der eine Ordnung im Auslauf noch im Wesentlichen der Ordnung im Einlauf entspricht. Hier kann beispielsweise vorgesehen sein, dass eine Abweichung des Platzes des Behälters von der ursprünglichen Ordnung um bis zu 0,1% der gesamten Pufferleistung gemessen in Behältern oder um bis zu 0,2% oder bis zu 0,5% oder bis zu 1% erfindungsgemäß noch als im Wesentlichen dieselbe Ordnung wie im Einlauf verstanden wird.

Mit dieser Einrichtung kann flexibel ein Transport der Behälter durch die Puffereinrichtung hindurch erfolgen, wenn kein Puffern erforderlich ist, ohne dass die Anordnung der Behälter hierbei verändert wird. Gleichzeitig kann durch Steuern der Pufferbahnen die Pufferkapazität bedarfsabhängig gesteigert werden und dennoch die Ordnung der Behälter beibehalten werden. Hiermit wird ein effizienter und gleichzeitig flexibler Transport von Behältern in der Einrichtung ermöglicht.

Es kann vorgesehen sein, dass die Steuereinheit ausgebildet ist, die wenigstens zwei Transportbänder und/oder die wenigstens zwei Pufferbahnen abhängig von einer notwendigen Pufferkapazität zu steuern.

Verglichen mit einem lediglich Hindurchleiten von Behältern durch den Pufferbereich oder die Transportbänder kann beispielsweise durch Reduzieren der Transportgeschwindigkeit der Behälter in einer der Pufferbahnen bewirkt werden, dass die Behälter auch in eine benachbarte Pufferbahn übertreten, sodass ein Puffern der Behälter im Pufferbereich erfolgt. Dies kann gerade so gewählt werden, dass eine notwendige Pufferkapazität vom Pufferbereich gewährleistet wird und gleichzeitig die Behälter den Auslauf im Wesentlichen in derselben Ordnung erreichen, wie sie im Einlauf zugeführt wurden. Hierdurch wird die Flexibilität der Einrichtung beim Puffern von Behältern je nach Bedarf weiter erhöht.

In einer Ausführungsform ist vorgesehen, dass die Einrichtung einen Detektor zum Detektieren eines Behälterdurchsatzes im Einlauf und/oder im Auslauf umfasst und dass die Steuereinheit ausgebildet ist, eine notwendige Pufferkapazität basierend auf dem detektierten Behälterdurchsatz zu bestimmen.

Der Detektor kann beispielsweise eine Kamera, Lichtschranke oder ähnliches sein und im Einlauf und/oder im Auslauf vorgesehen sein, um einen Behälterdurchsatz im Einlauf und/oder im Auslauf zu bestimmen. Basierend darauf kann dann festgestellt werden, ob der Behälterdurchsatz im Einlauf größer ist als im Auslauf oder, wenn der Detektor beispielsweise nur in einem der beiden vorgesehen ist, einen vorgegebenen Grenzwert überschreitet. Je nach Überschreitung dieses Grenzwertes oder je nach Differenz der Behälterdurchsätze im Einlauf und Auslauf kann dann die notwendige Pufferkapazität ermittelt und ein Steuern der Transportbänder und/oder der wenigstens zwei Pufferbahnen abhängig von der notwendigen Pufferkapazität erfolgen. Hierdurch kann auf sich ändernde Umstände, beispielsweise stromauf oder stromab der Einrichtung, zielgerichtet durch Anpassung der Pufferkapazität reagiert werden.

Es kann vorgesehen sein, dass die Steuereinheit ausgebildet ist, basierend auf wenigstens einem Betriebsparameter, der indikativ für einen Behälterzustrom und/oder Behälterabfluss aus der Einrichtung ist, die notwendige Pufferkapazität zu bestimmen. Der Betriebsparameter kann beispielsweise einen Durchsatz einer stromauf der Einrichtung angeordneten Behälterbehandlungsmaschine (definierend den Behälterzustrom) und/oder ein Durchsatz an Behältern in einer Behälterbehandlungsmaschine stromab der Einrichtung (definierend den Behälterabfluss) sein oder diese umfassen. Abhängig von einer etwaigen Differenz dieser Durchsätze und/oder abhängig davon, ob der oder die Durchsätze stromauf oder stromab der Einrichtung einen vorgegebenen Grenzwert überschreiten oder unterschreiten, kann die notwendige Pufferkapazität dann angepasst werden.

Es kann vorgesehen sein, dass das Steuern der wenigstens zwei Transportbänder und/oder der wenigstens zwei Pufferbahnen ein Steuern einer Transportgeschwindigkeit und/oder ein Steuern einer Beschleunigung von Behältern in den wenigstens zwei Transportbändern und/oder den wenigstens zwei Pufferbahnen umfasst. Durch Anpassen von Transportgeschwindigkeiten oder Beschleunigungen, wozu auch Verzögerungen der Behälter zählen sollen, kann flexibel auf etwaige Veränderungen im gesamten Behältertransport reagiert werden, um so die Pufferkapazität anzupassen.

Der Einlauf und/oder der Auslauf kann einen mehrreihigen Behältertransporteur umfassen. Die mehrreihigen Behältertransporteure können insbesondere als einzelne parallel zueinander angeordnete Transportbänder ausgeführt sein, in denen die Behälter einreihig transportiert werden können. Die Transportbänder können zumindest teilweise durch Trennelemente wie Leitbleche voneinander getrennt sein, sodass der Transport der Behälter in den jeweiligen Transporteuren geordnet erfolgt. Hierdurch ist ein anschließendes Verteilen der Behälter beispielsweise auf mehrere Behälterbehandlungsmaschinen zuverlässig möglich.

Die Einrichtung kann ein Umlenkelement zum Umlenken von Behältern aus dem Einlauf in den Verteilbereich umfassen und/oder die Einrichtung kann ein Führungselement umfassen, das den Pufferbereich in Richtung des Auslaufs verjüngt und Behälter im Pufferbereich in Richtung des Auslaufs führen kann.

Das Umlenkelement kann beispielsweise als gekrümmtes Leitblech ausgebildet sein, um einen Übergang der Behälter von dem Einlauf in den Verteilbereich zu ermöglichen. Die Behälter werden gegen das Umlenkelement im Einlauf gefördert und aufgrund dessen Krümmung und dem sich ergebenden Behälterdruck aufgrund nachfolgender Behälter in den Verteilbereich überführt, indem sie dann in die entgegengesetzte Richtung transportiert werden.

Das Führungselement kann beispielsweise ebenfalls als gekrümmtes oder auch nicht gekrümmtes, aber in Richtung des Auslaufs angestelltes Leitblech ausgebildet sein, gegen das die Behälter bei ihrem Transport im Pufferbereich laufen und aufgrund des sich ergebenden Behälterdrucks beziehungsweise der sich ergebenden Zwangskräfte in Richtung des Auslaufs gefördert werden. Hierdurch kann auf einfache Weise ein Überführen der Behälter in die jeweiligen Bereiche bewirkt werden.

Es kann vorgesehen sein, dass der Auslauf gesehen in der dritten Richtung in einem Bereich links oder rechts des Pufferbereichs angeordnet ist. Diese Ausführungsform ist insbesondere bevorzugt, wenn die Behälter beim Durchleiten durch den Pufferbereich diesen ebenfalls links oder rechts in der äußersten Pufferbahn passieren. Hierdurch kann der von den Behältern in dem Pufferbereich zurückzulegende Weg reduziert werden. Es kann alternativ auch vorgesehen sein, dass der Auslauf in einem Bereich etwa in der Mitte des Pufferbereichs, gesehen in der dritten Richtung, angeordnet ist. Unter "etwa in der Mitte" ist hier der Bereich des Pufferbereichs zu verstehen, der sich vom 0,25-fachen bis zum 0,75-fachen, bevorzugt vom 0,4-fachen bis 0,6-fachen der Länge des Pufferbereichs gesehen in der dritten Richtung erstreckt.

Erfindungsgemäß ist weiterhin ein Verfahren zum Transportieren und bedarfsabhängigen Puffern von Behältern mit einer Einrichtung zum Transportieren und bedarfsabhängigen Puffern von Behältern vorgesehen, die Einrichtung umfassend einen Einlauf, in dem entlang einer ersten Richtung transportiert werden, einen Verteilbereich umfassend wenigstens zwei in einer zweiten Richtung entgegengesetzt zur ersten Richtung unabhängig voneinander bewegbare Transportbänder, wobei die Behälter von dem Einlauf dem Verteilbereich zugeführt werden, einen Pufferbereich, dem Behälter von dem Verteilbereich zugeführt werden, wobei die Behälter im Pufferbereich in wenigstens zwei Pufferbahnen unabhängig voneinander in einer dritten Richtung quer zur zweiten Richtung gefördert und gepuffert werden können, einen Auslauf, dem Behälter vom Pufferbereich zugeführt und in dem Behälter entlang einer vierten Richtung parallel zur dritten Richtung gefördert werden, wobei die Einrichtung eine Steuereinheit umfasst, wobei die Steuereinheit die wenigstens zwei Transportbänder und die wenigstens zwei Pufferbahnen so steuert, dass Behälter entsprechend einer Ordnung im Einlauf nach Passieren des Pufferbereichs dem Auslauf mit im Wesentlichen derselben Ordnung zugeführt werden.

Mit diesem Verfahren ist ein flexibler Transport und ein flexibles Puffern von Behältern bei gleichzeitig reduziertem Platzbedarf möglich.

Es kann vorgesehen sein, dass die Steuereinheit die wenigstens zwei Transportbänder und/oder die wenigstens zwei Pufferbahnen abhängig von einer notwendigen Pufferkapazität steuert. Mit dieser Ausführungsform kann flexibel auf sich ändernde Betriebsparameter, insbesondere beim Transport der Behälter, stromab und stromauf der Einrichtung reagiert werden.

Es kann vorgesehen sein, dass die Einrichtung einen Detektor zum Detektieren eines Behälterdurchsatzes im Einlauf und/oder im Auslauf umfasst und dass die Steuereinheit eine notwendige Pufferkapazität basierend auf dem detektierten Behälterdurchsatz bestimmt und/oder dass die Steuereinheit basierend auf wenigstens einem Betriebsparameter, der indikativ für einen Behälterzustrom und/oder Behälterabfluss aus der Einrichtung ist, die notwendige Pufferkapazität bestimmt. Diese Ausführungsform gestattet eine Anpassung der notwendigen Pufferkapazität an den Zustrom und Abfluss von Behältern.

In einer Ausführungsform ist vorgesehen, dass das Steuern der wenigstens zwei Transportbänder und/oder der wenigstens zwei Pufferbahnen ein Steuern einer Transportgeschwindigkeit und/oder ein Steuern einer Beschleunigung von Behältern in den wenigstens zwei Transportbändern und/oder den wenigstens zwei Pufferbahnen umfasst. Hiermit kann flexibel der Transport der Behälter in den Transportbändern und den Pufferbahnen eingestellt werden, sodass die Pufferkapazität zuverlässig einstellbar ist.

Der Einlauf und/oder der Auslauf kann einen mehrreihigen Behältertransporteur umfassen. Mit dieser Ausführungsform kann ein Zuführen oder Abführen von Behältern aus bzw. in mehrere Behälterbehandlungsmaschinen erfolgen.

Die Einrichtung kann ein Umlenkelement umfassen, das Behältern aus dem Einlauf in den Verteilbereich umlenkt, und/oder die Einrichtung kann ein Führungselement umfassen, das den Pufferbereich in Richtung des Auslaufs verjüngt und Behälter im Pufferbereich in Richtung des Auslaufs führt.

Mit dieser Ausführungsform kann auf einfache Weise ein Verteilen der Behälter und gezieltes Umleiten der Behälterströme realisiert werden.

Der Auslauf kann gesehen in der dritten Richtung in einem Bereich links oder rechts des Pufferbereichs angeordnet sein. Mit dieser Ausführungsform kann der von Behältern, insbesondere in dem Fall, in dem ein bloßes Durchleiten der Behälter durch den Pufferbereich erfolgt, zurückgelegte Weg reduziert werden, sodass der Transport der Behälter effizienter gestaltet werden kann.

### Kurze Beschreibung der Figuren

- Figur 1: zeigt eine Ausführungsform einer Einrichtung zum Transportieren und bedarfsweisen Puffern von Behältern.
- Figur 2: zeigt ein Fließschema eines Verfahrens zum Transportieren und bedarfsweisen Puffern von Behältern, gemäß einer Ausführungsform.

### Ausführliche Beschreibung

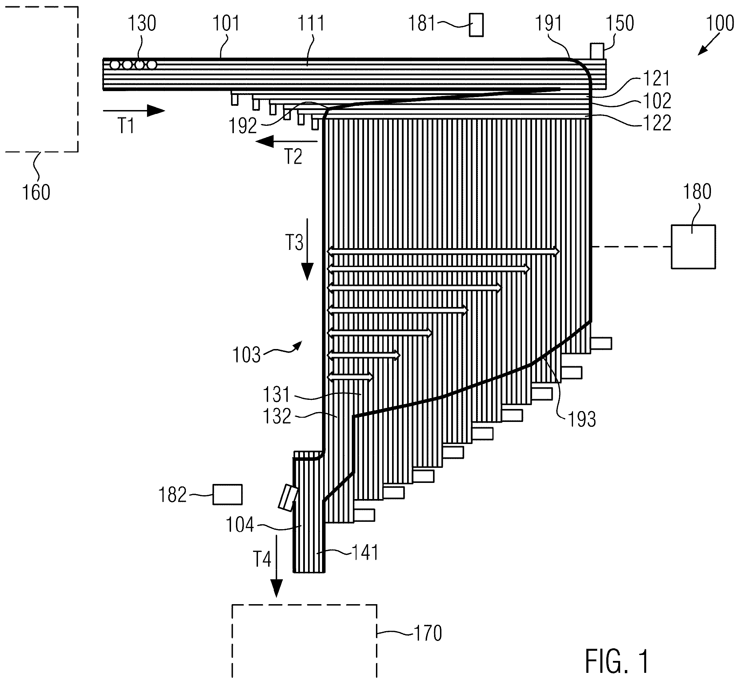

Figur 1 zeigt eine schematische Ansicht einer Einrichtung 100 gemäß einer Ausführungsform. Die Einrichtung 100 ist vorgesehen zum Transportieren von Behältern 130 wie beispielsweise Flaschen, Dosen oder dergleichen in der getränkeverarbeitenden Industrie oder der Kosmetikindustrie oder der Medizintechnik. Die Erfindung ist hinsichtlich der Ausgestaltung der Behälter nicht beschränkt.

Die Einrichtung 100 kann insbesondere zwischen zwei Behälterbehandlungsmaschinen 160 und 170 angeordnet sein. Die Behälterbehandlungsmaschinen 160 und 170 sind hinsichtlich ihrer Ausgestaltung nicht beschränkt. Beispielsweise kann es sich bei der Behälterbehandlungsmaschine 160 um einen Füller oder einen Verschließer handeln, der Behälter mit einem Produkt befüllt und/oder verschließt. Auch ein kombinierter Füller und Verschließer, der das Befüllen und Verschließen in einer Maschine realisiert, kann vorgesehen sein. Die Behälterbehandlungsmaschine 170 kann beispielsweise eine Dekorationsvorrichtung oder auch eine Inspektionseinrichtung sein und als Dekorationsvorrichtung beispielsweise als Etikettiermaschine oder Druckmaschine ausgebildet sein, die ein oder mehrere Dekorationselemente wie Etiketten oder Druckmotive auf die Behälter aufbringen kann. Die Erfindung ist jedoch diesbezüglich nicht beschränkt und auch andere Ausführungsformen der Behälterbehandlungsmaschinen 160 und 170 sind denkbar.

Die Einrichtung 100 umfasst einen Einlauf 101, über den Behälter herangefördert werden können. Der Einlauf 101 kann beispielsweise als Massentransporteur zum im Wesentlichen ungeordneten Transport von Behältern 130 ausgestaltet sein, kann aber optional auch mehrere Transportbänder 111 umfassen, die optional zumindest in einem Teilbereich des Einlaufs 101 durch Führungen oder Begrenzungen wie beispielsweise Leitbleche voneinander getrennt sein können, sodass zumindest bis zum sich anschließenden Verteilbereich 102 ein geordneter Transport der Behälter in den einzelnen Transportbändern beziehungsweise durch diese und die Begrenzungselemente gebildete Gassen erfolgen kann.

Die Behälter werden in dem Einlauf 101 entlang einer ersten Richtung T1 transportiert. In der hier dargestellten Ansicht ist die Richtung T1 von links nach rechts verlaufend. Der Einlauf 101 kann durch ein Antriebselement 150 wie beispielsweise einen Servomotor oder auch mehrere Servomotoren angetrieben werden.

Die Einrichtung 100 umfasst weiterhin einen Verteilbereich 102. Diesem können die Behälter aus dem Einlauf 101 zugeführt werden. Dazu kann optional vorgesehen sein, dass am Ende des Einlaufs 101 ein Umlenkelement 191 angeordnet ist, das beispielsweise in Form einer gekrümmten Führung ausgestaltet sein kann. Die Behälter laufen in dem Einlauf 101 gegen diese gekrümmte Führung und werden durch das unter ihnen Hinwegbewegen des oder der Transportbänder des Einlaufs an dem Umlenkelement 191 entlang gedrängt, das aufgrund seiner Krümmung ein Überführen der Behälter in den Verteilbereich 102 bewirkt.

Der Verteilbereich 102 umfasst wenigstens zwei unabhängig voneinander antreibbare Transportbänder 121 und 122. Diese sind so angeordnet, dass sie Behälter in einer zweiten Richtung T2 entgegen der ersten Richtung T1 fördern können. Die Transportbänder 121 und 122 können jeweils ein eigenes Antriebselement umfassen bzw. mit einem eigenen Antriebselement verbunden sein, sodass eine Transportgeschwindigkeit und/oder Beschleunigung und/oder Verzögerung von Behältern in den jeweiligen Transportbändern unabhängig von dem jeweils anderen Transportband möglich ist. Der Verteilbereich ist hinsichtlich der Anzahl der vorgesehenen Transportbänder nicht beschränkt, sodass auch mehr als die wenigstens zwei Transportbänder, beispielsweise drei oder vier oder fünf Transportbänder oder mehr vorgesehen sein können. Diese sind dann jeweils so ausgestaltet, dass sie unabhängig voneinander antreibbar sind.

Weiterhin umfasst die Einrichtung 100 einen Pufferbereich 103. Der Pufferbereich umfasst wenigstens zwei Pufferbahnen 131 und 132. Die Pufferbahnen sind zumindest so ausgestaltet, dass sie unabhängig voneinander einen Transport der Behälter ermöglichen. Jede Pufferbahn kann beispielsweise ein Transportband umfassen, das über ein Antriebselement wie beispielsweise einen Servoantrieb in einer dritten Richtung T3 quer zur zweiten Richtung T2 bewegt werden kann, um die Behälter von dem Verteilbereich in Richtung eines Auslaufs 104 zu transportieren.

Es kann jedoch auch vorgesehen sein, dass der Pufferbereich 103 in jeder der Pufferbahnen 131, 132 mehr als ein Transportband umfasst.

Erfindungsgemäß sind die Pufferbahnen jeweils so zu verstehen, dass unabhängig von der Anzahl der Transportbänder pro Pufferbahn die Behälter in jeder Pufferbahn (also ggf. in jedem Transportband einer jeweiligen Pufferbahn) mit genau einer Transportgeschwindigkeit transportiert werden, wobei die Transportgeschwindigkeit der Behälter in den einzelnen Pufferbahnen verschieden sein kann.

Um ein Überführen der Behälter von dem Verteilbereich 102 in den Pufferbereich 103 zu ermöglichen, kann ein weiteres Umlenkelement oder Führungselement 192 vorgesehen sein, das aufgrund seiner Krümmung dazu führt, dass gegen dieses Umlenkelement 192 laufende Behälter in dem Verteilbereich in Richtung des Pufferbereichs 103 abgelenkt werden. Vorteilhaft kann vorgesehen sein, dass das Führungselement hinsichtlich seiner Position und/oder seiner Form mechanisch verstellbar ist. Das Führungselement 192 kann beispielsweise als Blech ausgestaltet sein und auf einer Führung gelagert sein, die eine translatorische Bewegung des gesamten Führungselements ermöglicht. Zum Bewegen des Führungselements 192 entlang der Führung kann ein Antriebselement, wie beispielsweise ein Servomotor vorgesehen sein. Alternativ oder zusätzlich können ein oder mehrere Bereiche des Führungselements 192 gegeneinander bewegbar sein. Hierzu kann jeder Bereich mit einem Aktuator, beispielsweise einem Stellantrieb, fest verbunden sein. Durch ein (beispielsweise automatisiertes) Betätigen wenigstens eines der Aktuatoren kann die Kontur des Führungselements 192 verändert werden. In dieser Ausführungsform kann das Führungselement einstückig (beispielsweise als Blech) aber auch mehrstückig ausgeführt sein, wobei die Elemente, die das Führungselement 192 bilden, gegeneinander bewegbar sein können und jedes Element bevorzugt mit genau einem separaten Aktuator verbunden ist, um die Kontur des Führungselements 192 zu verändern.

Hierdurch verteilen sich die Behälter im Pufferbereich 103.

Gesehen in der Richtung T3 ist gegenüber des Verteilbereichs erfindungsgemäß ein Auslauf 104 vorgesehen, dem die Behälter aus dem Pufferbereich 103 zugeführt werden können. Dabei kann insbesondere vorgesehen sein, dass der Auslauf 104 gesehen in der dritten Richtung T3 links oder rechts oder etwa in der Mitte des Pufferbereichs oder zumindest einer Pufferbahn angeordnet ist, sodass die Behälter aus dieser Pufferbahn dem Auslauf 104 zugeführt werden können. Um auch ein Überführen der Behälter aus anderen Pufferbahnen zu ermöglichen, kann ein weiteres Führungselement 193 im Pufferbereich 103 angeordnet sein, das so gekrümmt ist, dass die gegen dieses Führungselement 193 laufenden Behälter in Richtung des Auslaufs 104 abgelenkt werden.

Dabei kann vorgesehen sein, dass der Auslauf 104 in Draufsicht auf die Einrichtung, wenn die Richtung T1 von links nach rechts verläuft, die Richtung T2 von rechts nach links und die Richtung T3 von oben nach unten, wie in der in Figur 1 dargestellten Ausführungsform, links des Pufferbereichs 103 angeordnet ist. Hierdurch wird gewährleistet, dass in einem Fall, in dem ein Puffern von Behältern in dem Pufferbereich 103 nicht notwendig ist, die Behälter direkt über die erste Pufferbahn 132 ohne Pufferung dem Auslauf 104 zugeführt werden können. In diesem Fall dient der Pufferbereich 103 lediglich als Transporteinrichtung, die die Strecke zwischen dem Verteilbereich und dem Auslauf 104 überbrücken kann.

Verlaufen die Richtungen entgegengesetzt, also die erste Richtung T1 von rechts nach links, die zweite Richtung T2 von links nach rechts und die dritte Richtung T3 erneut von oben nach unten, so kann der Auslauf 104 an der rechten Seite des Pufferbereichs in der in Figur 1 gezeigten Ausführungsform angeordnet sein. Anders ausgedrückt kann in einer Ausführungsform vorgesehen sein, dass der Auslauf 104 immer auf der Seite des Pufferbereichs angeordnet ist, von der aus Behälter im Einlauf 101 zugeführt werden.

Grundsätzlich kann vorgesehen sein, dass der Einlauf und der Auslauf entweder auf derselben Seite am Pufferbereich angeordnet sind oder auf gegenüberliegenden Seite am Pufferbereich angeordnet sind.

Erfindungsgemäß umfasst die Einrichtung 100 weiterhin eine Steuereinheit 180, die so ausgebildet ist, dass sie die Transportbänder 121 und 122 im Verteilbereich sowie die Pufferbahnen 131 und 132 im Pufferbereich 103 so steuern kann, dass Behälter, die in dem Einlauf 101 mit einer bestimmten Ordnung angelangen (also einer durchnummerierten Reihenfolge der Behälter) den Auslauf mit im Wesentlichen derselben Ordnung erreichen.

Das Steuern der Transportgeschwindigkeiten und/oder der Beschleunigung und/oder der Verzögerung der Behälter in den einzelnen Transportbändern oder Pufferbahnen kann dabei insbesondere basierend auf mit Detektoren 181, 182 (etwa einer Kamera oder einer Lichtschranke) gemessenen Behälterdurchflüssen im Einlauf und im Auslauf oder stromauf des Einlaufs und stromab des Auslaufs erfolgen. Alternativ oder zusätzlich kann das Steuern auch basierend auf der Steuereinheit anderweitig zugänglich gemachten Betriebsparametern, insbesondere dem Durchsatz von Behälterbehandlungsmaschinen 160 und 170 erfolgen. Wird beispielsweise eine Differenz zwischen dem Behälterdurchsatz in der Behälterbehandlungsmaschine 160 und dem Behälterdurchsatz in der Behälterbehandlungsmaschine 170 festgestellt, kann basierend auf der Größe dieser Differenz eine Pufferkapazität im Pufferbereich durch Einstellen der Transportgeschwindigkeiten in den einzelnen Pufferbahnen 131 und 132 erfolgen.

Dabei kann die Steuereinheit beispielsweise über einen deterministischen Algorithmus verfügen, mit dem die notwendigen Einstellungen der Transportgeschwindigkeiten in den Transportbändern und/oder den Pufferbahnen zum Erreichen einer bestimmten Pufferkapazität bestimmt werden können. Hierzu kann die Steuereinheit beispielsweise einen Speicher, insbesondere in Form einer Lookup-Table, umfassen, in dem bestimmten Behälterdurchsätzen stromauf und stromab der Einrichtung bestimmte Sätze von Transportgeschwindigkeiten in den einzelnen Transportbändern und Pufferbahnen zugeordnet sind. Je nach gemessenen oder übermittelten Durchsätzen kann dann die hinterlegte Kombination von Geschwindigkeiten ausgewählt und von der Steuereinheit eingestellt werden.

Alternativ kann die Steuereinheit auch ein trainiertes neuronales Netz umfassen, das aus dem Stand der Technik, insbesondere aus der WO 2024/008342 A1 grundsätzlich bekannt ist. Dieses neuronale Netz kann anhand einer Vielzahl von unterschiedlichen Kombinationen von Durchsätzen von Behältern stromauf und stromab der Einrichtung so trainiert worden sein, dass es die geeignetsten Kombinationen von Geschwindigkeiten der einzelnen Transportbänder und Pufferbahnen bestimmen kann. Durch diese Ausführungsform wird eine möglichst flexible und lückenlose Anpassung an beliebige Kombinationen von Durchsätzen von Behältern stromab und stromauf der Einrichtung möglich.

Für das Training des neuronalen Netzes kann insbesondere wie nachfolgend beschrieben vorgegangen werden.

Zunächst kann ein Digital-Zwillingsmodell der Einrichtung, insbesondere sämtlicher Transportund Pufferbänder mithilfe einer Simulationssoftware (Game-/Physik-Engine) erstellt werden. Anschließend können mehrere Simulationen des Betriebs der Einrichtung unter Verwendung eines geeigneten DOE (Design of Experiment) oder sequenziell durchgeführt werden, wobei bevorzugt jede Simulation mit unterschiedlicher Bändergeschwindigkeiten durchgeführt wird. Dabei wird der Belegungsgrad in vordefinierten Bereichen in der Simulation bestimmt, um die Gleichmäßigkeit der Flaschenverteilung am Anfang des Einlaufs zu schätzen. Nach dem Sammeln dieser Daten wird ein Umgebungsmodell erstellt, um andere (nicht gesehene) Szenarien/ Bändergeschwindigkeiten und deren Einfluss auf die Flaschenverteilungen zu untersuchen.

Anschließend kann beispielsweise mittels einer Kamera oder einem anderen Sensor der reale Belegungsgrad bei verschiedenen Bandgeschwindigkeiten gemessen werden und hiermit erneut verschiedene Simulationen durchgeführt werden, um so einen oder mehrere reale Datensätze zu erhalten. Das trainierte Umgebungsmodell wird mit diesen realen Datensätzen hinsichtlich seiner Parameter weiter optimiert. Ein Kl-Modell wird trainiert, um die Variation zwischen verschiedenen Bereichen zu minimieren und die Gleichmäßigkeit der Flaschenverteilung zu maximieren. Falls in der Realität kein Zugriff auf die Maschine besteht, kann das trainierte Modell (Game-Engine-Daten) auf der Physik-Engine überprüft und/oder optimiert werden. Dabei kann für das Optimieren und Trainieren ein grundsätzlich bekanntes Award-Modell verwendet werden, das bei richtiger Bestimmung der Bandgeschwindigkeiten für eine bestimmte Belegung einen Award zuordnet, sodass die Parameter des Kl-Modells (neuronalen Netzes) in Richtung einer korrekten Bestimmung der Bandgeschwindigkeiten optimiert wird und falsche Bestimmungen der Bandgeschwindigkeiten mit fortschreitendem Training reduziert werden.

Die eigentliche Trainingsphase kann optional durch direkte Interaktion mit dem optimierten Modell durchgeführt werden, wobei ein Agent in jedem definierten Zeitschritt mit der Umgebung interagieren, indem er die Geschwindigkeiten der Förderbänder manipuliert. Diese kontinuierliche Interaktion wird entweder zumindest für einen gewissen Zeitabschnitt während des Transports eines Massenstroms von Behältern oder von Anfang bis Ende des Massenstroms der Behälter ausgeführt. Durch Kamera-/Sensor-Messungen des Belegungsgrades, die die Verteilung des Massenstroms darstellen, kann die Verteilung des Massenstroms als Bewertungsfunktion für den Agenten einbezogen werden, der einen Wert zur Bewertung der Reihe/Kombination von Bandgeschwindigkeiten entlang definierter mehrerer Zeitschritte abgibt. Das Ziel des Agenten ist einen optimalen Bewertungswert zu erreichen und somit eine gleichmäßige Verteilung des Massenstroms zu erreichen.

Zur Messung des Belegungsgrades kann eine Vielzahl von Möglichkeiten genutzt werden.

Beispielsweise kann eine Kamera und eine zugehörige Bildverarbeitungssoftware genutzt werden, die gezielt in den von der Kamera aufgenommenen Bildern Pixel Behältern zuordnet. Durch das Erkennen und Kennzeichnen von Pixeln, die zu einem Behälter gehören, wird die Anzahl der Behälterpixel in einem bestimmten vordefinierten Bereich ermittelt und anschließend von der Gesamtzahl der in diesem Bereich vorhandenen Pixel subtrahiert. So kann der Belegungsgrad ermittelt werden. Es kann im Anschluss ein segmentiertes Modell verwendet werden, das mit gelabelten Daten (Pixel und zugehörige Angabe, ob es sich um einen Behälterpixel handelt oder nicht) und einer definierten Klasse trainiert wird. Alternativ kann auch ein trainingsfreies Modell verwendet werden. Diese Art von Kl-Modellen sucht nach Pixeln, die zu einem bestimmten Label gehören (beispielsweise mit Hilfe von Ähnlichkeitsanalysen) und erkennt sie im definierten Bereich.

Alternativ oder zusätzlich kann zum Bestimmen des Belegungsgrads auch ein Ultraschallsensor verwendet werden. Der Ultraschallsensor wird beispielsweise über dem Einlauf platziert und so ausgerichtet, dass er Wellen in Richtung des Bands senden und Reflexionen von den Behältern erkennen kann. Der Sensor sendet beispielsweise Ultraschallwellen mit einer oder mehreren bestimmten Frequenzen aus. Diese Wellen durchqueren die Luft und prallen zurück, wenn sie auf ein Objekt treffen. Der Sensor erkennt die reflektierten Wellen. Die Zeit, die die Wellen für die Rückkehr benötigen, wird gemessen. Anhand der Flugzeit (die Zeit, die die Wellen für den Hinund Rückweg benötigen) berechnet der Sensor den Abstand zwischen sich und dem Objekt. Wenn der gemessene Abstand kleiner ist als der Abstand zum leeren Band, zeigt dies das Vorhandensein eines Objekts an. Durch kontinuierliche Messung des Abstands an verschiedenen Punkten entlang des Bands kann der Sensor das Belegungsgrad bestimmen. Durch die Integration von Daten über die Zeit und über die Breite des Bands kann so der gesamte Belegungsgrad berechnet werden, d.h. wie viel des Bands von Behältern belegt ist. Diese Daten können dann für das Training und/oder im Betrieb genutzt werden.

Alternativ oder zusätzlich können zur Bestimmung des Belegungsgrads auch ein oder mehrere Lichtschranken verwenden werden. Diese Lichtschranken können einen Lichtstrahl (sichtbar oder infrarot) verwenden, um die Anwesenheit oder Abwesenheit von Objekten zu erkennen. Die Lichtschranken erkennen die Anwesenheit eines Objekts, wenn der von der jeweiligen Lichtschranke ausgesendete Lichtstrahl unterbrochen wird (bei Durchstrahl- und Retroreflexionstypen) oder wenn das Licht zurückreflektiert wird (bei diffusen Reflexionstypen). Mehrere Lichtschranken können verwendet werden, um verschiedene Abschnitte der Bänder (beispielsweise im Einlauf) abzudecken und Daten über die Anwesenheit von Behältern entlang der Länge des Bands bereitzustellen.

Während obige Beschreibung grundsätzlich davon ausging, dass ein Modell basierend auf einer Behältergröße und/oder Behälterform erstellt und/oder trainiert wurde, kann vorgesehen sein, dass für jede Behältergröße und/oder Behälterform zunächst ein Modell zur Bestimmung der Bandgeschwindigkeiten etwa zum Erreichen eines bestimmten Belegungsgrads erstellt und/oder trainiert wird. Diese Modelle können dann kombiniert werden, um so ein geschlossenes Modell für jede Behältergröße und/oder Behälterform zu erhalten, das dann im Betrieb verwendet werden kann. Das Modell kann dann im Betrieb beispielsweise anhand von Messungen im Betrieb die Behältergröße und/oder Behälterform bestimmen oder diese können dem Modell bei Inbetriebnahme und/oder Sortenumstellung der Behälter vorgegeben werden. Basierend auf diesen Informationen und basierend auf während des Betriebs gemessenen Werten zum Belegungsgrad kann dann eine Optimierung der Bandgeschwindigkeiten erfolgen.

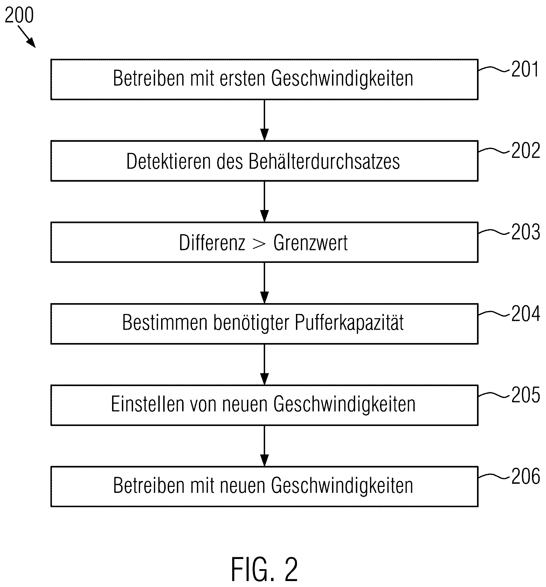

Figur 2 zeigt eine mögliche Ausführungsform eines Verfahrens zum Transportieren und bedarfsweisen Puffern von Behältern, die mit der Einrichtung entsprechend den Ausführungsformen der Figur 1 durchgeführt werden kann.

Das Verfahren 200 beginnt zunächst mit dem Schritt 201, bei dem die Einrichtung mit vorgegebenen Geschwindigkeiten für die einzelnen Transportbänder und Pufferbänder betrieben wird. Dies kann ein Zustand sein, in dem kein Puffern von Behältern im Pufferbereich notwendig ist, sondern die Behälter lediglich durch den Pufferbereich hindurch geleitet werden, wie dies bereits voranstehend beschrieben wurde. Es kann sich hierbei aber auch um einen Zustand handeln, bei dem die Behälter bereits teilweise in dem Pufferbereich gepuffert werden, um einen Unterschied im Behälterdurchsatz zwischen dem Einlauf und dem Auslauf zu kompensieren.

Mit den im Zusammenhang mit der Figur 1 beschriebenen Detektoren 181 und 182 kann im Schritt 202 ein Detektieren der Behälterdurchsätze im Einlauf bzw. Auslauf oder stromauf des Einlaufs und stromab des Auslaufs erfolgen. Das Detektieren kann alternativ, wie bereits beschrieben, auch durch entsprechende Übergabe von den Durchsatz kennzeichnenden Parametern im Betrieb von stromab oder stromauf angeordneten Behälterbehandlungsmaschinen, wie beispielsweise den Behälterbehandlungsmaschinen 160 und 170 erfolgen.

Die Steuereinheit kann dann im Schritt 203 die Behälterdurchsätze vergleichen. Dabei kann insbesondere geprüft werden, ob eine Differenz in den Behälterdurchsätzen einen bestimmten Grenzwert überschreitet. Dieser Grenzwert kann beispielsweise abhängig von der aktuellen Differenz der Behälterdurchsätze bestimmt werden und beispielsweise als relativer Wert des größeren oder des kleineren Behälterdurchsatzes vorgegeben werden. Differenzen unterhalb des Betrags dieses Grenzwertes, also sowohl in positiver als auch negativer Hinsicht, können ohne Berücksichtigung bleiben, da die erforderlichen Änderungen in den Transportgeschwindigkeiten beispielsweise zu gering wären. Alternativ zu einer Bestimmung, ob die Differenz in den Behälterdurchsätzen größer oder kleiner als ein Grenzwert ist, kann auch jede erhaltene Differenz in den Behälterdurchsätzen, die von einer aktuellen Differenz abweicht, genutzt werden, um die Transportgeschwindigkeiten der Transportbänder und/oder Pufferbahnen zu steuern.

Im Schritt 204 wird dann aus der Differenz die notwendige Pufferkapazität bestimmt. Dies kann insbesondere umfassen, dass die Anzahl der Behälter, die in dem Pufferbereich pro Zeiteinheit gespeichert werden müssen, aus der Differenz der Behälterdurchsätze bestimmt wird. Beträgt die Differenz im Durchsatz beispielsweise 500 Behälter/min, sodass 500 Behälter weniger den Auslauf passieren können als über den Einlauf der Einrichtung zugeführt werden, so müssen 500 Behälter/min in dem Pufferbereich zwischengespeichert werden und können nicht unmittelbar an den Auslauf weitertransportiert werden. Ist die Differenz negativ, fließen also mehr Behälter über den Auslauf ab, als über den Einlauf zuströmen, wird die Pufferkapazität negativ, beziehungsweise die Anzahl der in dem Pufferbereich gepufferten Behälter muss reduziert werden und zwar entsprechend der Differenz der Durchflüsse. Erneut unter der Annahme, dass die Differenz in diesem Fall -500 Behälter/min beträgt, also 500 Behälter mehr über den Auslauf abströmen als über den Einlauf zuströmen, so müssen pro Minute aus dem Pufferbereich 500 Behälter zusätzlich in den Auslauf überführt werden.

Ist die notwendige Pufferkapazität bestimmt, so kann im Schritt 205 zunächst die Kombination von Geschwindigkeiten der Transportbänder und Pufferbahnen bestimmt werden und diese anschließend eingestellt werden. Sind diese eingestellt, kann im Schritt 206 dann ein Betreiben der Einrichtung mit den neuen Geschwindigkeiten für die Transportbänder und die Pufferbahnen erfolgen, sodass der Betrieb der Einrichtung mit den neu eingestellten Geschwindigkeiten ausgeführt werden kann.

Dabei wird das Bestimmen der Geschwindigkeiten stets so ausgeführt, dass die Ordnung der Behälter im Auslauf im Wesentlichen der Ordnung der Behälter im Einlauf entspricht.

Grundsätzlich wird zum Erhöhen der Pufferkapazität die Transportgeschwindigkeit in der dem Auslauf nächstgelegenen Pufferbahn reduziert. Hierdurch strömen nicht mehr so viele Behälter von dem Verteilbereich direkt an den Auslauf, sondern drängen in zu der ersten Pufferbahn benachbarte Pufferbahnen. Je nach Reduktion der Geschwindigkeit der dem Auslauf nächsten Pufferbahn verteilen sich die Behälter über zumindest eine weitere, optional aber auch mehrere weitere Pufferbahnen, sodass die Pufferkapazität des Pufferbereichs weiter ansteigt. Durch geeignete Einstellung der Transportgeschwindigkeiten in dem Verteilbereich und der Transportgeschwindigkeiten in dem Pufferbereich sowie optional durch gezielte Strukturierung der Umlenkelemente und der Führungselemente kann dann erreicht werden, dass die Behälter ihre Ordnung mit Erreichen des Auslaufs verglichen mit der Ordnung im Einlauf im Wesentlichen beibehalten.

Dies setzt nicht notwendig voraus, dass die Ordnung im Pufferbereich dieselbe ist, da sich die Behälter in unterschiedlichen Pufferbahnen verteilen können.

## Patentansprüche

1. Einrichtung zum Transportieren und bedarfsabhängigen Puffern von Behältern, die Einrichtung umfassend einen Einlauf, in dem entlang einer ersten Richtung transportiert werden können, einen Verteilbereich umfassend wenigstens zwei in einer zweiten Richtung entgegengesetzt zur ersten Richtung unabhängig voneinander bewegbare Transportbänder, wobei die Behälter von dem Einlauf dem Verteilbereich zugeführt werden können, einen Pufferbereich, dem Behälter von dem Verteilbereich zugeführt werden können, wobei die Behälter im Pufferbereich in wenigstens zwei Pufferbahnen unabhängig voneinander in einer dritten Richtung quer zur zweiten Richtung gefördert und gepuffert werden können, einen Auslauf, dem Behälter vom Pufferbereich zugeführt und in dem Behälter entlang einer vierten Richtung parallel zur dritten Richtung gefördert werden können, wobei die Einrichtung eine Steuereinheit umfasst, die ausgebildet ist, die wenigstens zwei Transportbänder und die wenigstens zwei Pufferbahnen so zu steuern, dass Behälter entsprechend einer Ordnung im Einlauf nach Passieren des Pufferbereichs dem Auslauf mit im Wesentlichen derselben Ordnung zugeführt werden.

2. Einrichtung nach Anspruch 1, wobei die Steuereinheit ausgebildet ist, die wenigstens zwei Transportbänder und/oder die wenigstens zwei Pufferbahnen abhängig von einer notwendigen Pufferkapazität zu steuern.

3. Einrichtung nach Anspruch 2, wobei die Einrichtung einen Detektor zum Detektieren eines Behälterdurchsatzes im Einlauf und/oder im Auslauf umfasst und wobei die Steuereinheit ausgebildet ist, eine notwendige Pufferkapazität basierend auf dem detektierten Behälterdurchsatz zu bestimmen.

4. Einrichtung nach Anspruch 2 oder 3, wobei die Steuereinheit ausgebildet ist, basierend auf wenigstens einem Betriebsparameter, der indikativ für einen Behälterzustrom und/oder Behälterabfluss aus der Einrichtung ist, die notwendige Pufferkapazität zu bestimmen.

5. Einrichtung nach einem der Ansprüche 1 bis 4, wobei das Steuern der wenigstens zwei Transportbänder und/oder der wenigstens zwei Pufferbahnen ein Steuern einer Transportgeschwindigkeit und/oder ein Steuern einer Beschleunigung von Behältern in den wenigstens zwei Transportbändern und/oder den wenigstens zwei Pufferbahnen umfasst.

6. Einrichtung nach einem der Ansprüche 1 bis 5, wobei der Einlauf und/oder der Auslauf einen mehrreihigen Behältertransporteur umfassen.

7. Einrichtung nach einem der Ansprüche 1 bis 6, wobei die Einrichtung ein Umlenkelement zum Umlenken von Behältern aus dem Einlauf in den Verteilbereich umfasst und/oder wobei die Einrichtung ein Führungselement umfasst, das den Pufferbereich in Richtung des Auslaufs verjüngt und Behälter im Pufferbereich in Richtung des Auslaufs führen kann.

8. Einrichtung nach einem der Ansprüche 1 bis 7, wobei der Auslauf gesehen in der dritten Richtung in einem Bereich links oder rechts des Pufferbereichs angeordnet ist.

9. Verfahren zum Transportieren und bedarfsabhängigen Puffern von Behältern mit einer Einrichtung zum Transportieren und bedarfsabhängigen Puffern von Behältern, die Einrichtung umfassend einen Einlauf, in dem entlang einer ersten Richtung transportiert werden, einen Verteilbereich umfassend wenigstens zwei in einer zweiten Richtung entgegengesetzt zur ersten Richtung unabhängig voneinander bewegbare Transportbänder, wobei die Behälter von dem Einlauf dem Verteilbereich zugeführt werden, einen Pufferbereich, dem Behälter von dem Verteilbereich zugeführt werden, wobei die Behälter im Pufferbereich in wenigstens zwei Pufferbahnen unabhängig voneinander in einer dritten Richtung quer zur zweiten Richtung gefördert und gepuffert werden können, einen Auslauf, dem Behälter vom Pufferbereich zugeführt und in dem Behälter entlang einer vierten Richtung parallel zur dritten Richtung gefördert werden, wobei die Einrichtung eine Steuereinheit umfasst, wobei die Steuereinheit die wenigstens zwei Transportbänder und die wenigstens zwei Pufferbahnen so steuert, dass Behälter entsprechend einer Ordnung im Einlauf nach Passieren des Pufferbereichs dem Auslauf mit im Wesentlichen derselben Ordnung zugeführt werden.

10. Verfahren nach Anspruch 9, wobei die Steuereinheit die wenigstens zwei Transportbänder und/oder die wenigstens zwei Pufferbahnen abhängig von einer notwendigen Pufferkapazität steuert.

11. Verfahren nach Anspruch 10, wobei die Einrichtung einen Detektor zum Detektieren eines Behälterdurchsatzes im Einlauf und/oder im Auslauf umfasst und wobei die Steuereinheit eine notwendige Pufferkapazität basierend auf dem detektierten Behälterdurchsatz bestimmt und/oder wobei die Steuereinheit basierend auf wenigstens einem Betriebsparameter, der indikativ für einen Behälterzustrom und/oder Behälterabfluss aus der Einrichtung ist, die notwendige Pufferkapazität bestimmt.

12. Verfahren nach einem der Ansprüche 9 bis 11, wobei das Steuern der wenigstens zwei Transportbänder und/oder der wenigstens zwei Pufferbahnen ein Steuern einer Transportgeschwindigkeit und/oder ein Steuern einer Beschleunigung von Behältern in den wenigstens zwei Transportbändern und/oder den wenigstens zwei Pufferbahnen umfasst.

13. Verfahren nach einem der Ansprüche 9 bis 12, wobei der Einlauf und/oder der Auslauf einen mehrreihigen Behältertransporteur umfassen.

14. Verfahren nach einem der Ansprüche 9 bis 13, wobei die Einrichtung ein Umlenkelement umfasst, das Behältern aus dem Einlauf in den Verteilbereich umlenkt, und/oder wobei die Einrichtung ein Führungselement umfasst, das den Pufferbereich in Richtung des Auslaufs verjüngt und Behälter im Pufferbereich in Richtung des Auslaufs führt.

15. Verfahren nach einem der Ansprüche 9 bis 14, wobei der Auslauf gesehen in der dritten Richtung in einem Bereich links oder rechts des Pufferbereichs angeordnet ist.
